# EUROPEAN PATENT APPLICATION

(11) **EP 4 397 797 A1**
(43) Date of publication of application: **10.07.2024**
(21) Application number: 23220310.9
(22) Date of filing: 27.12.2023
(51) Int. Cl.: D04B 1/12, B32B 5/06, B32B 5/26, A41D 31/04, A41D 31/26, D04B 1/14

(54) **FABRIC FOR CLOTHING AND THE LIKE**

(30) Priority: 05.01.2023 IT 202300000084
(71) Applicant: Somma & C. S.r.l., 43123 Parma (IT)
(72) Inventor: SOMMA, Mario, 20121 MILANO (IT)
(74) Representative: Modiano, Micaela Nadia

(57) **Abstract**

A fabric (1) for clothing and the like comprising a first layer (2) obtained by knitting at least one yarn (3) with at least one carbon yarn (4) and a second layer (5) coupled to the first layer and comprising two mesh layers (6, 7) with a conductive membrane (8) in between.

## Description

The present invention relates to a fabric for clothing and the like. More specifically, the present invention relates to an elastic fabric for clothing, which is thermoregulating, offers protection from magnetic fields (acts as a magnetic barrier), from snow, water, wind, and static electricity discharge, and which is elastic and breathable, in order to offer greater comfort to the user.

As is known, fabrics with carbon fibers exist on the market and have a wide range of applications and also have many special uses.

Among fabrics with carbon fibers, there are fabrics in which the carbon fiber is woven according to an interlaced structure of the weft and warp type. These fabrics can be laminated layer by layer in a conventional manner.

It is known that fabrics for clothing can be made by weaving a plurality of yarns of polyester fibers, acetate/acrylic fibers, polyamide fibers and carbon fibers, resulting in items of clothing that offer antibacterial effects and which are capable of discharging the static electricity with which the wearer of the garment may come into contact.

However, conventional fabrics, although partially satisfactory for the purposes listed above, are however not capable of offering comfort for the wearer in terms of lightness and softness to the touch, and therefore these are not fabrics that can be used, for example, for cashmere garments, where softness is an essential and primary requirement of the garment and which is vital in order to obtain garments in which traditional cashmere yarns are paired with carbon yarns.

In other words, a garment made of cashmere or similarly soft material, which is paired with a carbon yarn, will be bought and appreciated by the wearer if the latter does not perceive a difference to the touch with respect to a same garment made of the same material but without carbon fibers.

The aim of the present invention is to provide a fabric for items of clothing and the like, which is substantially indistinguishable from a fabric of conventional type, and which still offers the highest properties of comfort for the wearer in addition to anti-static properties.

Within this aim, an object of the present invention is to provide a fabric for clothing and the like, which offers aesthetic characteristics similar to the conventional fabric.

Another object of the present invention is to provide a fabric for items of clothing and the like that is highly reliable, easily and practically implemented and of low cost.

This aim and these and other objects which will become more apparent hereinafter are achieved by a fabric for items of clothing and the like, characterized in that it comprises a first layer obtained by knitting at least one fabric yarn with at least one carbon yarn, and a second layer, adapted to be coupled to the first layer, provided by two layers of mesh coupled to a conductive membrane.

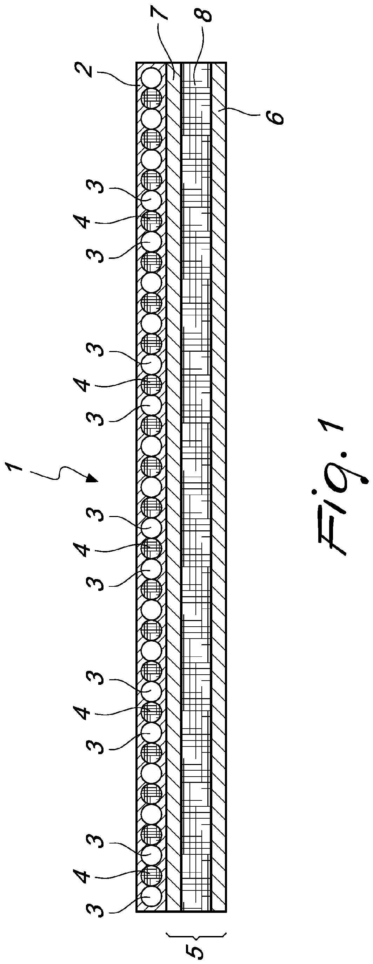

Further characteristics and advantages of the invention will become more apparent from the description of the preferred, but non exclusive, embodiment of the fabric according to the present invention, illustrated by way of non-limiting example in the accompanying drawings wherein the single figure is a transverse cross-sectional view of the fabric according to the present invention.

With reference to the figure, the fabric according to the present invention, generally designated by the reference numeral 1, comprises a first layer 2 of knitted fabric produced using at least one fabric yarn 3 and at least one carbon yarn 4, woven so as to have one yarn knitted inside with one yarn knitted outside, according to the technique known as Vanisè.

For example, the carbon yarn used can be a yarn with a composition of 48% nylon and 52% carbon, of type 44 D.T.E.X.

Obviously, the carbon content of the carbon yarn can vary according to requirements and is not limited to the value given above.

The first layer of knitted fabric 2 is coupled to a second layer 5 which is constituted by two layers of mesh 6 and 7, which are coupled to a conductive membrane 8 with, for example, the pearl-stitched layer of mesh.

The conductive membrane is a membrane with a carbon percentage and a non-porous and water-repellent structure.

For example, a membrane that can be used can be a membrane with 80% PU, approximately 10% TA, and approximately 10% carbon.

Advantageously, the first layer is sewn to the second layer.

The fabric obtained by coupling the first layer of knitting 2 with the second layer 5 makes it possible therefore to obtain a knitted fabric that, externally, has the characteristics of a knitted fabric, and, internally, has those of a synthetic, polyurethane fabric, and in this manner the garment made with such fabric can be of the reversible type, i.e., it can be worn indifferently on one side or on the other. The knitted fabric side therefore gives the appearance of a knitting produced in the conventional way, while the side with the layer 5 gives the appearance of a waterproof, synthetic fabric.

The resulting fabric has high electromagnetic, antistatic and antibacterial properties, as well as having high softness to the touch, being substantially indistinguishable from a normal knitted fabric made with the same yarn, but without the carbon yarn 4 and the conductive membrane which are features of the present invention.

The fabric according to the present invention can be advantageously used to provide, at least partially, an item of footwear.

In practice it has been found that the fabric according to the present invention fully achieves the set aim and objects, in that it is possible to make items of clothing that have an antistatic effect, are soft to the touch, and are wearable on the side of the knitted fabric or on the side of the waterproof fabric.

The fabric, thus conceived, is susceptible of numerous modifications and variations, all of which are within the scope of the appended claims.

In addition, the materials used, as well as the contingent shapes and dimensions, may be any according to the requirements and to the state of the art.

The disclosures in Italian Patent Application No. 102023000000084 from which this application claims priority are incorporated herein by reference.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A fabric (1) for items of clothing and the like, **characterized in that** it comprises a first layer (2) obtained by knitting at least one fabric yarn (3) with at least one carbon yarn (4), and a second layer (5), adapted to be coupled to the first layer (2), provided by two layers of mesh (6, 7) coupled to a conductive membrane (8).

2. The fabric according to claim 1, **characterized in that** said conductive membrane (8) is a membrane with a percentage of carbon.

3. The fabric according to claim 1 or 2, **characterized in that** said first layer 2) is provided by knitting said fabric yarn (3) and said carbon yarn (4) separately, using the Vanisè technique.

4. The fabric according to claim 1, **characterized in that** said first layer (2) is sewn to said second layer (5).

5. A method for providing a fabric (1), **characterized in that** it comprises the steps of:
providing a first layer (2) of knitted fabric by weaving at least two yarns separately from each other using a Vanisè technique, one of the two yarns being a fabric yarn (3) and a second of the two yarns being a carbon yarn (4);
providing a second layer (5) by coupling two layers of mesh (6, 7) to a conductive membrane (8);
sewing said first layer (2) to said second layer (5).

6. The method according to claim 5, **characterized in that** said conductive membrane (8) is a membrane with a percentage of carbon.

7. An item of clothing, **characterized in that** it is provided by means of a fabric according to one or more of claims 1 to 4.

8. The item of clothing according to claim 7, **characterized in that** it is of the reversible type.

9. An item of footwear, **characterized in that** it is provided at least in part by means of a fabric according to one or more of claims 1 to 4.
